# EUROPEAN PATENT APPLICATION

(11) **EP 4 706 905 A1**
(43) Date of publication of application: **11.03.2026**
(21) Application number: 24841406.2
(22) Date of filing: 18.07.2024
(51) Int. Cl.: B25J 9/16, B25J 11/00

(54) **METHOD AND APPARATUS FOR EXECUTING USER TASK, DEVICE, AND MEDIUM**

(71) Applicant: Beijing Youzhuju Network Technology Co., Ltd., Beijing 101299 (CN)
(72) Inventor: LI, Yifeng, Beijing 100028 (CN); ZHU, Minzhao, Beijing 100028 (CN); KONG, Tao, Beijing 100028 (CN)
(74) Representative: Grünecker Patent- und Rechtsanwälte PartG mbB
(86) International application number: PCT/CN2024/106245
(87) International publication number: WO 2026/016134

(57) **Abstract**

Provided are a method, apparatus, device and medium for executing a user task. In a method, a user task is received from a user, and the user task instructs a robot device to obtain a first object. The first object is positioned in a physical space where the robot device is located based on a first image of the physical space. The robot device moves to a position of the first object to obtain a second image of the first object. In response to determining, based on the second image, that the first object cannot be obtained, the robot device operates the second object to obtain the first object. By means of the exemplary implementation of the disclosure, a robot device can execute a user task in a complex physical space, so that the flexibility and accuracy of performing a task by the robot device in a complex environment can be improved, thereby completing an expected user task.

## Description

### FIELD

Example implementations of the present disclosure relate generally to the field of robots, and more particularly, to a method, an apparatus, a device, and computer-readable storage medium for performing a user task by using a robot.

### BACKGROUND

Robotic technology has been rapidly developed and has been widely used in a plurality of technical fields. A variety of specialized robot devices have been developed currently, for example, in industrial environments, robots can be used to perform a variety of tasks, such as machining, grabbing, sorting, packing, etc. For another example, in a home environment, a floor clearing robot, a glass cleaning robot, and the like have been developed. However, the robot generally can only perform a preset fixed task, and cannot perform different user tasks according to user requirements.

### SUMMARY

In a first aspect of the present disclosure, a method for performing a user task is provided. The method includes: receiving a user task from a user, the user task instructing a robot device to obtain a first object; positioning the first object in a physical space where the robot device is located based on a first image of the physical space; moving the robot device to a position of the first object so as to obtain a second image of the first object; and in response to determining, based on the second image, that the first object is not capable of being obtained, causing the robot device to operate the second object so as to obtain the first object.

In a second aspect of the present disclosure, an apparatus for performing a user task is provided. The apparatus includes: a receiving module configured to receive a user task from a user, the user task instructing a robot device to obtain a first object; a positioning module configured to position the first object in a physical space where the robot device is located based on a first image of the physical space; an obtaining module configured to move the robot device to a position of the first object so as to obtain a second image of the first object; and a performing module configured to cause the robot device to operate the second object so as to obtain the first object in response to determining based on the second image that the first object is not capable of being obtained.

In a third aspect of the present disclosure, an electronic device is provided. The electronic device includes: at least one processing unit; and at least one memory coupled to the at least one processing unit and storing instructions for execution by the at least one processing unit that, when executed by the at least one processing unit, cause the electronic device to perform a method according to the first aspect of the present disclosure.

In a fourth aspect of the present disclosure, there is provided a computer readable storage medium having stored thereon a computer program which, when executed by a processor, causes the processor to implement the method according to the first aspect of the present disclosure.

In a fifth aspect of the present disclosure, a computer program product is provided, including a computer program, where the computer program, when executed by a processor, implements the method according to the first aspect of the present disclosure.

It should be appreciated that what is described in this Summary is not intended to limit the key features or essential features of the implementations of the present disclosure, nor is it intended to limit the scope of the present disclosure. Other features of the present disclosure will become readily appreciated from the following description.

### BRIEF DESCRIPTION OF THE DRAWINGS

Hereinafter, the above and other features, advantages, and aspects of various implementations of the present disclosure will become more apparent with reference to the following detailed description taken in conjunction with the accompanying drawings. In the drawings, the same or similar reference signs denote the same or similar elements, where:
Fig. 1 illustrates a block diagram of an application environment according to an exemplary implementation of the present disclosure;
Fig. 2 illustrates a block diagram for performing a user task according to some implementations of the present disclosure;
Fig. 3 illustrates a block diagram of an image acquisition process according to some implementations of the present disclosure;
Fig. 4 illustrates a block diagram of a process of calling a language model according to some implementations of the present disclosure;
Fig. 5 illustrates a block diagram of a process of calling an action model according to some implementations of the present disclosure;
Figs. 6A and 6B illustrate block diagrams of processes of obtaining an object respectively according to some implementations of the present disclosure;
Fig. 7 illustrates a flowchart of a method for performing a user task according to some implementations of the present disclosure;
Fig. 8 illustrates a block diagram of an apparatus for performing a user task according to some implementations of the present disclosure; and
Fig. 9 illustrates a block diagram of a device capable of implementing various implementations of the present disclosure.

### DETAILED DESCRIPTION

Embodiments of the present disclosure will be described in more detail below with reference to the accompanying drawings. Although certain implementations of the present disclosure are shown in the drawings, it should be understood that the present disclosure may be implemented in various forms and should not be construed as limited to the implementations set forth herein; rather, these implementations are provided for a thorough and complete understanding of the present disclosure. It should be understood that the drawings and implementations of the present disclosure are only for exemplary purposes and are not intended to limit the scope of protection of the present disclosure.

In the description of implementations of the present disclosure, the term "including" and its similar language should be understood as open-ended including, that is, "including but not limited to". The term "based on" should be read as "based at least in part on". The term "one implementation" or "the implementation" should be read as "at least one implementation". The term "some implementations" should be understood as "at least some implementations". Other explicit and implicit definitions may also be included below. As used herein, the term "model" may denote an association relationship between respective data. The association relationship may be obtained, for example, based on a variety of technical solutions that are currently known and/or will be developed in the future.

It is to be understood that the data involved in the technical solution (including but not limited to the data itself, the acquisition or use of the data) should comply with the requirements of the corresponding legal regulations and related provisions.

It should be understood that, before the technical solutions disclosed in the embodiments of the present disclosure are used, the user should be informed of the type of the personal information, the usage range, the usage scenario, and the like related to the present disclosure and the authorization of the user should be obtained in an appropriate manner according to relevant legal regulations.

For example, in response to receiving an active request from a user, prompt information is sent to the user to explicitly prompt the user that an operation requested by the user will require acquisition and use of personal information of the user. Thus, the user can autonomously select, according to the prompt information, whether to provide personal information to software or hardware such as an electronic device, an application program, a server, or a storage medium that executes the operations of the technical solutions of the present disclosure.

As an optional but non-limiting implementation, a manner of sending prompt information to a user in response to receiving an active request from the user may be, for example, a manner of popping up a window, and the prompt information may be presented in a text manner in the pop-up window. In addition, the pop-up window may also carry a selection control for the user to select whether he/she "agrees" or "disagrees" to provide personal information to the electronic device.

It can be understood that, the above processes of notification and obtain of the user authorization are only illustrative, and do not limit the implementation of the present disclosure, and other methods meeting relevant legal regulations may also be applied to the implementation of the present disclosure.

As used herein, the term "in response to" refers to a state in which a corresponding event occurs or a condition is satisfied. It will be appreciated that the timing of the execution of a subsequent action that is performed in response to the event or condition, and the time at which the event occurs or condition is established, are not necessarily strongly correlated. For example, in some cases, the subsequent actions may be performed immediately upon occurrence of an event or upon satisfaction of a condition; in other cases, subsequent actions may be performed only after a period of time has passed when an event occurs or a condition is established.

### Example Environment

In recent years, a robot technology and a machine learning technology have been widely applied to a plurality of application scenarios. However, a robot generally can only perform a preconfigured fixed task, and cannot perform different user tasks according to user requirements. In particular, in a complex application environment, it is difficult for a robot device to determine a user's demand and perform a corresponding task.

A simple robot device for performing a specific task has been developed, however, such a simple robot device cannot understand complicated user instructions and cannot perform a desired task in accordance with the user instructions in a complicated physical space 160. At this time, it is desirable that the operation of the robot can be controlled in an efficient manner, thereby a desired task can be performed.

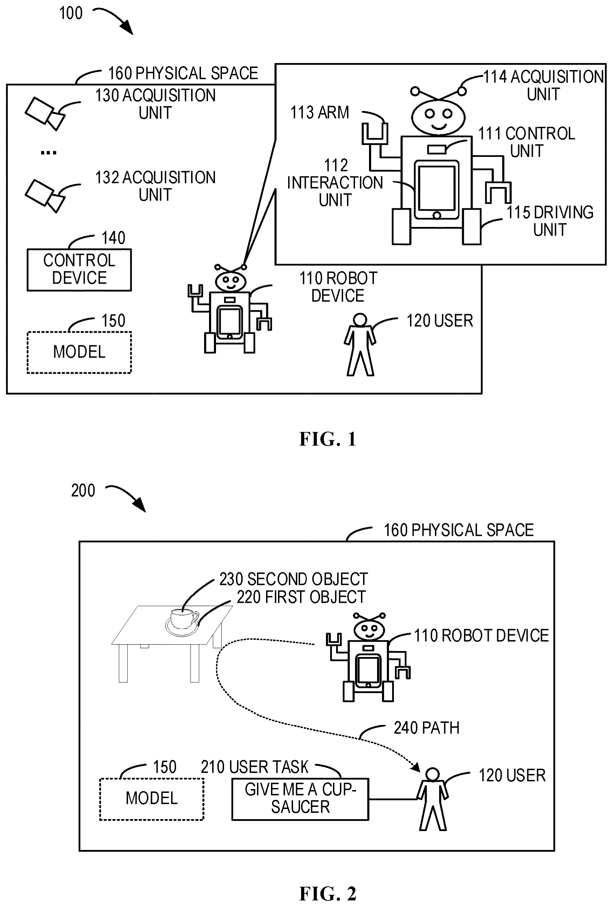

According to an exemplary implementation of the present disclosure, a method for performing a user task is provided. An application environment according to one example implementation of the present disclosure is described with reference to Fig. 1, which illustrates a block diagram 100 of an application environment according to one example implementation of the present disclosure. As shown in Fig. 1, the robot device 110 and the user 120 may be located in a physical space 160, and the user 120 may control the robot device 110 to perform various tasks. The physical space 160 may include, but is not limited to, one or more rooms. For example, in a home environment, the physical space 160 may include, but is not limited to, a living room, a bedroom, a study, a kitchen, a toilet, etc., or a combination including one or more of the foregoing.

As shown in Fig. 1, the robot device 110 may include a plurality of parts. For example, as a control center of the robot device 110, the control unit 111 may load an application into the control unit 111 to control each part in the robot device. The user 120 may use an interaction unit 112 to interact with the robot device 110, for example, to input control instructions to the robot device 110, so as to perform a desired task by using the robot device 110. The robot device 110 may include an arm 113 for performing an action of grabbing, releasing, etc. For example, the arm 113 may grab a certain object and move the object to a desired position, etc.

Alternatively, and/or additionally, the robot device 110 may also include an acquisition unit 114. Here, the acquisition unit 114 may include a variety of types, e. g., an image acquisition unit, a sound acquisition unit, etc. Alternatively, and/or additionally, the robot device 110 may further include a sensing unit for detecting a surrounding object, e. g., a distance of the robot from the surrounding object may be detected based on a laser, etc. The robot device 110 may also include a driving unit 115, e. g., the robot device 110 can be deployed over a movable base, and the driving unit 115 can drive wheels of the base to move along a desired path.

The physical environment 160 may include one or more acquisition units 130, ..., and 132, for example, one or more image acquisition devices may be deployed in a room to acquire images of the room from various perspectives. The physical environment 160 may include a control device 140 that can control one or more acquisition units 130, ..., and 132, etc., via a network (not shown). Alternatively, and/or additionally, in a smart home environment, the control device 140 may control various electrical devices in the physical space 160.

Alternatively, and/or additionally, a machine learning model (e. g., model 150) may be provided to manage physical space 160. It should be appreciated that while Fig. 1 illustrates the model 150 located inside the physical space 160, alternatively and/or additionally, the model 150 may be located at a remote device outside the physical space 160, and the control device 140, the robot device 110, or other devices may access the remote model 150 via a network.

The model 150 may include one or more models. If the model 150 includes a plurality of models, the plurality of models may include a plurality of types of models. The model 150, for example, may include at least a language model (LM) and an action model. The language model may have a question-answering capability by learning from a large amount of corpus. The action model may control the robot device 110 to perform various actions. The model 150 may further include, for example, an image recognition model, a text recognition model, and the like.

As shown in Fig. 1, the user 120 may instruct the robot device 110 to operate various objects in the physical space 160. Here, the object may be various items in a home environment, for example, the user 120 may instruct the robot device 110 to look for an object in the physical space 160. For another example, the user 120 can instruct the robot device 110 to place a found object to a designated position, etc.

### Overview of Performing Tasks

In order to at least partially solve the deficiencies in the prior art, according to an exemplary implementation of the present disclosure, a method for performing a user task is provided. An overview of one exemplary implementation according to the present disclosure is described with reference to Fig. 2, which illustrates a block diagram 200 for performing a user task according to some implementations of the present disclosure.

As shown in Fig. 2, the robot device 110 in the physical space 160 may receive a user task 210 from a user 120. The user task 210 can instruct the robot device 110 to obtain the first object 220. For example, the user 120 may say "Give me a cup-saucer" in natural language, in an example in Fig. 2, the first object 220 is "cup-saucer". The robot device 110 can obtain a first image of the physical space 160 where the robot device 110 is located. For example, the robot device 110 may obtain the first image via at least any one of the acquisition units 114, 130, ..., and 132.

The position of the first object 220 in the physical space 160 is determined based on the first image, the robot device 110 is instructed to move to a position of the first object 220, and a second image related to the first object 220 is obtained at the position of the first object 220. For example, it may be determined through the first image that the cup-saucer is located on a cabinet of the kitchen, whereby the robot device 110 may be controlled to move to the front of the cabinet of the kitchen. The second image is obtained at a position in front of the cabinet via at least any one of the acquisition units 114, 130, ..., and 132.

The second image includes a first object 220 and possibly a second object 230. Existence of the second object 230 may result in not being able to obtain the first object 220. In this case, the second object 230 needs to be operated to obtain the first object 220. In the context of the present disclosure, the second object 230 may have a coupling relationship with the first object 220 and thus result in the first object not being obtained.

Based on the coupling relationship between the first object 220 and the second object 230, the robot device removes the coupling relationship between the first object 220 and the second object 230 by operating the first object 220 and/or the second object 230, so as to obtain the first object 220. For example, it is confirmed, according to the second image obtained by the robot device 110, that the coffee cup is also placed on the cup-saucer (i. e. the cup-saucer has a coupling relationship with the coffee cup). In this case, the robot device 110 may remove the coupling relationship between the coffee cup and the cup-saucer by moving the coffee cup, so that the robot device obtains the cup-saucer.

It should be understood that the coupling relationship herein may indicate that two objects are coupled to each other, and the second object may affect obtaining of the first object separately. The foregoing coupling relationship is merely exemplary, and alternatively and/or additionally, the coupling relationship may further include other situations. For example, a cup-saucer contains other objects, so that the cup-saucer cannot be obtained. For another example, assuming that a user expects to obtain a clothes hanger, and there is a coupling relationship between a clothes-hanger and the clothes on the clothes hanger, so that the clothes hanger cannot be obtained. For convenience of description, a case where the first object cannot be obtained due to existence of the coupling relationship will be described hereinafter only taking the case where the second object is located above the first object as an example.

According to some implementations of the present disclosure, the method described above may be performed at any computing device having computing capabilities. For example, the method described above may be performed by using an application deployed at the robot device 110. Alternatively, and/or additionally, an application may be deployed at the control device 140 to perform the method described above.

With exemplary implementations of the present disclosure, the robot device may go to a predetermined position related to the first object 220 in the physical space 160 and operate the second object 230, that is, the coupling relationship between the first object 220 located at the predetermined position and the second object 230 is removed, thereby the first object 220 is obtained. In the context of the present disclosure, the purpose of operating the second object is to remove the coupling relationship between the two objects. At this point, the expressions "operating the second object", and "removing the coupling relationship between the first object and the second object", " removing the relationship", and the like may be used instead. In this manner, the robot device may also obtain the first object 220 through decoupling of the first object 220 and the second object 230. Thus, the flexibility and accuracy of the robot device performing tasks in a complex environment can be improved, and an expected user task can be completed more accurately.

### Detailed Process of Performing the Task

Having described an overview of some implementations in accordance with the present disclosure, in the following, more details regarding performing a user task will be described. For ease of description, more details of performing a user task are described below by taking that the control robot device 110 is controlled to take the cup-saucer as an example.

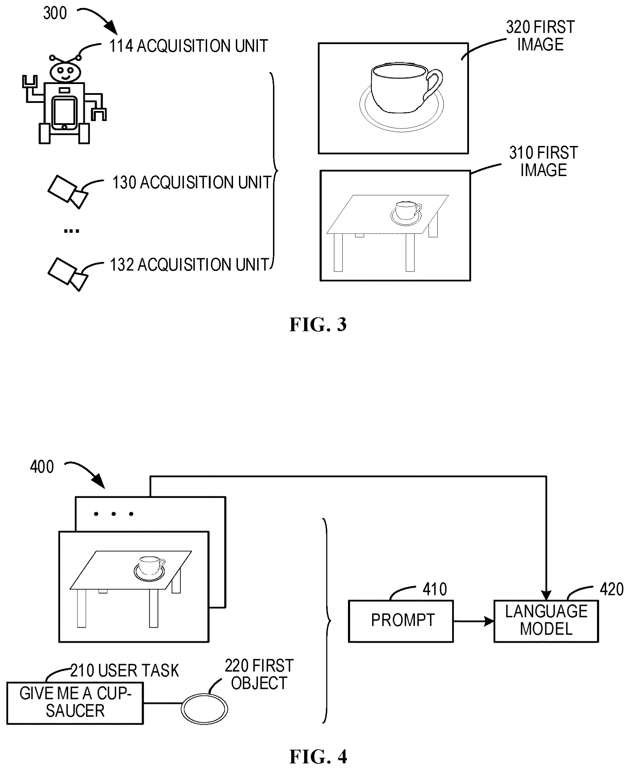

According to some implementations of the present disclosure, the first image may be from at least one of an acquisition device at the robot device, an acquisition device in the first physical space 160. Further details of image acquisition are described with reference to Fig. 3, which illustrates a block diagram 300 of an image acquisition process in accordance with some implementations of the present disclosure. As shown in Fig. 3, a first image 310 (e. g., one or more images 310) of the physical space 160 can be obtained from the acquisition unit 114 at the robot device 110. Since the robot device 110 can freely move in the physical space 160, the acquisition unit 114 may acquire images of various positions in the physical space 160, thereby facilitating searching for a target object.

Alternatively, and/or additionally, the first image 310 of the physical space 160 may be obtained from the acquisition units 130, ..., and 132. Here, the acquisition units 130, ..., and 132 may be pre-deployed at designated positions within the physical space 160, e. g., corner positions of ceilings, etc. In this way, an image of the physical space 160 taken from a top view angle can be obtained, thereby facilitating the overall understanding of the layout of the physical space 160, and further facilitating the positioning of a target object.

According to some implementations of the present disclosure, a first prompt may be obtained based on the first image 310 and the first object 220, where the first prompt is used to position the first object 220 in the first image 310. The prompts may be represented, for example, as follows: "Please recognize a cup-saucer from the following image", and the acquired first image 310 and first prompt are submitted to the machine learning model. After receiving the first image 310 and the prompt, the machine learning model recognizes the first object 220 from the first image 310 through analysis of the first prompt and processing of the first image 310. In the case that the first image 310 includes the first object 220, the machine learning model may output a response at the position of the first object 220 (e. g., the area coordinates of the first object 220 in the first image 310, and/or directly outputting a path to the position of the first object 220, etc.). If the first image 310 does not include a target object, the machine learning model may output a response of "not found". etc.

Upon receiving a first response of the machine learning model to the first prompt, the first object 220 is positioned based on the first response. In this manner, the machine learning model can help the robot device quickly and accurately determine the first object 220 in the first image 310 and further determine the position of the first object 220 in the physical space 160, and in turn can help the robot device quickly and accurately respond to the user's instruction and move to the position where the first object 220 is located.

According to one embodiment of the present disclosure, in response to determining presence of a plurality of first objects 220 in the physical space 160, a first message is provided to the user to indicate the presence of the plurality of first objects 220 in the physical space 160. For example, the machine learning model determines that two cup-saucers exist in the first image 310 by processing and analyzing the first image 310, and the machine learning model sends a response to the robot device that two cup-saucers exist in the first image 310. The robot device provides a first message to the user after receiving the response to indicate that there are two cup-saucers in the physical space 160. For example, the robot device may present the response "there are two cup-saucers in the current scene" to the user in a voice manner. In this way, the corresponding first object can be obtained according to the selection of the user, thereby improving the accuracy for the robot device to obtain an object.

Alternatively, and/or additionally, the robot device may also present the response to the user by way of a picture or video. For example, an image including two cup-saucers is presented on a display screen of the robot device. The image may be a partial enlarged view of the first image 310, and specific positions of the two cup-saucers may be marked in the image, so as to prompt a user of the positions of the cup-saucers.

After receiving the first information, the user may make a first answer to the first information. Based on the first answer to the first message from the user, a first object 220 is positioned. The first answer of the user may include a description of the shape, color, position, state of the first object 220. The first answer may be obtained by the acquisition unit 114 of the robot device 110, the acquisition units 130, ..., and 132 of the physical space 160, and sent to the machine learning model. The machine learning model positions a first object 220 related to the first answer from the first image 310 through analysis of the first answer. For example, the user may send a voice instruction "Please give me a red cup-saucer" to the robot device, and the machine learning model determines the red cup-saucer in the first image 310 as the first object 220 by analyzing the voice instruction. The user may also send instructions such as " Please give me the left cup-saucer", "Please give me the circular cup-saucer ", "Please give me an empty cup-saucer", etc. to the robot device, and according to these instructions, the machine learning model may determine the first object 220 from the first image 310, and help the robot device to position the first object 220.

The user may also send a first answer to the robot device through an action. For example, when there are two cup-saucers within the physical space 160, the user may point to a certain cup-saucer by hand to issue the first response. The acquisition unit 114 of the robot device 110, the acquisition units 130, ..., and 132 of the physical space 160 may obtain the first answer by capturing an action of the user.

According to an implementation of the present disclosure, a second prompt is obtained based on the second image 320 and the first object 220, where the second prompt is used to determine an operation mode of a coupling relationship. For example, the second prompt may be "How to get a cup-saucer". After obtaining the second prompt, the machine learning model analyses the second image 320, and generates a second response for removing the coupling relationship between the first object 220 and the second object 230. After receiving the second response of the machine learning model to the second prompt, the robot device determines an operation mode for the coupling relationship between the first object 220 and the second object 230. The robot device is instructed to remove the coupling relationship based on the operation mode. Through the second prompt, the machine learning model is enabled to further analyze the second image by means of the second prompt, so as to obtain an operation mode for the coupling relationship between the first object 220 and the second object 230. Thus, the coupling relationship between the first object 220 and the second object 230 can be quickly removed, and the response speed and service efficiency of the robot device are improved.

In some specific implementations, there is a coupling relationship between a first object 220 (e. g., a cup-saucer) and a second object 230 (e. g., a coffee cup) in the physical space 160 (e. g., the coffee cup is placed on the cup-saucer), and the obtained second image 320 describes the above coupling relationship. The machine learning model may perform a simulation operation on the first object 220 and the second object 230 in the second image 320 according to the second image 320 and the second prompt "How to get a cup-saucer" obtained based on the second image 320 and the first object 220, and output a second response, so as to determine the operation mode for removing the coupling relationship between the first object 220 and the second object 230. The robot device controls the first object 220 and/or the second object 230 based on the operation mode, for example, the robot device may move the coffee cup to separate the coffee cup from the cup-saucer, thereby removing the coffee cup from the cup-saucer.

According to an implementation of the present disclosure, a security constraint related to an operation mode may also be determined, and an action of a robot device is determined based on the security constraint and the operation mode. The installation constraints may include control constraints of the robot device on the first object 220 and/or the second object 230 and physical constraints of the robot device and other entities in the physical space 160. As an example, during the robot device 110 grabbing or releasing the first object 220 and/or the second object 230 via the arm 113, the robot may determine the material, weight, state, etc., of the first object 220 and/or the second object 230 from the first image 310 and/or the second image 320. In this way, physical quantities such as a grip force of the arm 113 and a speed and an acceleration when the arm 113 moves the first object 220 and/or the second object 230 are determined.

For example, the second object 230 that the robot device needs to move is a coffee cup filled with coffee. In this case, based on the machine learning model's determination of the second image 320, it is determined that the robot device needs to keep the mouth of the coffee cup in an upwardly facing position and move the coffee cup with a low acceleration when moving the coffee cup. For another example, the second object 230 that the robot device needs to move is a banana, and in this case, according to the machine learning model's determination of the second image 320, it is determined that the degree of the arm of the robot device grasping the banana is determined. By means of the described manners, the accuracy of the robot device in moving the first object 220 and/or the second object 230 can be improved, and the risk of the robot device damaging the first object 220 and/or the second object 230 can be reduced.

The security constraints may also include physical constraints of the robot device (e. g., an arm of the robot device) on the first object 220 and/or the second object 230, physical constraints on other entities in the physical space 160. For example, a cup-saucer to be taken by the robot device (the first object 220) is partially hidden behind another object (e. g., a coffee pot). The machine learning model determines through the second image 320 that an arm of the robotic needs to avoid the coffee pot when picking up the cup-saucer. As another example, when a robot device moves a coffee cup placed on a cup-saucer, the coffee cup needs to be replaced on the surface of a cabinet after the coffee cup is grasped and moved. In this process, not only is it necessary for the robot device to move the coffee cup, but the robot device is also required to control the coffee cup to reestablish a constraint with an entity (e. g., a cabinet) in the physical scene (i. e., the coffee cup is placed to the cabinet).

According to an embodiment of the present disclosure, the operation mode may include moving the first object 220 and/or the second object 230 to remove the coupling of the first object 220 and the second object 230. In some simple coupling relationships, such as where a coffee cup is placed on a cup-saucer, the robot device may grab the cup and drive the cup to move vertically upward, horizontally, and vertically downward in such a way that the coffee cup is placed on a cabinet and decoupled from the cup-saucer.

In some other implementations of the present disclosure, the coupling of the first object 220 and the second object 230 may also be removed by transforming the shape of the first object 220 and/or the second object 230. For example, the first object 220 and the second object 230 are fixed to each other in a snap-fitting manner, and the robot device may remove the coupling relationship with the first object 220 by operating the second object 230 in a deformation manner, so as to obtain the first object 220. By determining the security constraint of the operation mode and determining the action based on the security constraint, damage to the second object 230 by the robot device during operating the second object 230 is reduced, the security of the robot device in acquiring an object is improved, and the adaptability of the robot device to a complex environment is improved.

According to an embodiment of the present disclosure, the user may be provided with a second message, and the second message indicates that a coupling relationship exists between the first object 220 and the second object 230. A second answer of the user to the second message is received. The robot device is instructed to process the first object 220 based on the second answer. The machine learning model determines, according to the second image 320, that a coupling relationship exists between the first object 220 and the second object 230, and the machine learning model may control the robot device to send the second message to the user.

For example, the robot device may have sent a voice "There is a coffee cup on the cup-saucer, what can I do", and the user responds to the second message after receiving the second message sent by the robot device. After acquiring the second answer through the acquisition units 114, 130, ..., and 132, the robot device sends the second answer to the machine learning model. The machine learning model processes the second answer of the user, and sends a processing result to the robot device, so that the robot device processes the first object 220 according to the second answer of the user. In this way, a robot device can continuously process a problem according to a scene condition, and since the robot device can ask for a user about a condition in a physical space, the working accuracy of the robot device is improved.

In accordance with an implementation of the present disclosure, in response to determining that the second answer indicates to remove a coupling relationship, the robot device is instructed to remove the coupling relationship in order to obtain the first object 220. In response to determining that the second response indicates that the first object 220 was obtained directly, the robot device is instructed to obtain the first object 220. After the robot device sends the second message to the user and the user makes a second response instructing to remove the relationship according to the second message, the robot device may remove the coupling relationship between the first object 220 and the second object 230 according to the second answer. For example, the robot device inquires "There is a coffee cup on the cup-saucer, what can I do", and the user answers "to empty the cup-saucer". Thus, the robot device removes the coffee cup (i. e. removing the coupling relationship between the coffee cup and the cup-saucer) and obtains the cup-saucer. If the user answers "Give me the cup-saucer and the coffee cup together", the robot device may simultaneously obtain the cup-saucer and the coffee cup according to the answer.

According to an implementation of the present disclosure, in response to determining that there is a coupling relationship between the first object 220 and the second object 230 based on the second image 320, a candidate object for replacing the first object 220 may be determined. A third message may be provided to the user to indicate the candidate object. A third answer to the third message from the user may be received, and the candidate object may be selected as the first object 220. In some implementations, the machine learning model confirms from the second image 320 that the first object 220 and the second object 230 have a coupling relationship (e. g., a coffee cup is placed on a cup-saucer), furthermore, the machine learning model further finds, from the second image 320, that there is a candidate object near the first object 220 (for example, a bowl is placed near a cup-saucer). The machine learning model may instruct the robot device to send a third message asking the user that "There is a coffee cup on the cup-saucer, and there is an empty bowl next to the cup-saucer, do you want the cup-saucer or the bowl?" By means of the method, the flexibility of a robot device in picking up a first object 220 can be improved, so that the robot device can perform more flexible determination in a complex operating environment, thereby improving the success rate of the robot device in completing a task.

According to an implementation of the present disclosure, in response to determining that the first object 220 is in an unavailable state, the robot device is instructed to obtain a third object for adjusting the unavailable state. For example, the machine learning model determines through the second image 320 that the first object 220 (e. g., a cup-saucer) exists, but at this time the cup-saucer is stained with water. In this case, the machine learning model instructs the robot device to pick up a scratch pad or paper towel while picking up the cup-saucer. For another example, the robot learning model instructs the robot device to pick up the first object 220 (e. g., wine), while the robot device may also instruct that the robot device picks up the bottle opener. Thus, by determining a current state of the first object 220 or envisaging a usage scenario of the first object 220, more candidate objects are obtained, thereby improving the intelligence of the robot device in working, reducing the number of times that a user sends an instruction to the robot device, and improving the working efficiency of the robot device.

It should be appreciated that the machine learning model may obtain images within the physical space 160 through the acquisition units 114, 130, ..., and 132 before instructing the robot device to pick up candidate objects (e. g., paper towel, bottle opener, etc.) to find candidate objects that may exist in the physical space 160. Of course, the machine learning model may also determine candidate objects from the first image 310 or the second image 320. If the machine learning model determines the second object 230 having an association with the first object 220 in the current physical space 160, the machine learning model may instruct the robot device to pick up the candidate object.

According to an implementation of the present disclosure, if the first object 220 and the candidate object (if present) are obtained by the robot device, the robot device is instructed to move the first object 220 and the candidate object (if present) to a user position where the user is located.

According to an implementation of the present disclosure, the machine learning model may include a language model and an action model. The language model is a training and fine-tuning model, and has abundant knowledge of performing tasks in a plurality of fields. The language model may process related problems according to information such as prompts and images, and may output a processing result. The action model is configured to determine a specific action performed by the robot device according to a processing result of the language model, so that the robot device performs a corresponding action. The language model and the action model will be described in more detail below.

More details are described with reference to Fig. 4, which illustrates a block diagram 400 of a process for calling a language model in accordance with some implementations of the present disclosure. As shown in Fig. 4, it may be determined from the user task 210 that the first object 220 to be obtained is a "cup-saucer", and in this case, a prompt 410 may be generated based on the first image 310 and the first object 220. The prompt 410 may be represented as: "Position the cup-saucer in an image", etc. The first prompt 410 and the first image 310 may be input to the language model 420 such that the language model 420 finds the cup-saucer from the image 310.

According to some implementations of the present disclosure, the language model 420 is a training and fine-tuning model and has rich knowledge in performing tasks in a plurality of domains. Fig. 4 is merely illustrative and the language model 420 may process one or more images from different acquisition devices and find a first object 220, a second object 230, a candidate object, etc. For example, the language model 420 determines, from the second image 320, a second object 230 that has a coupling relationship with the first object 220, or the language model 420 determines, from the second image 320, a candidate object that has an association with the first object 220 in terms of use.

According to some implementations of the present disclosure, a fine-tuning operation may be performed on the model, for example, the robot device may be instructed to collect images of various parts in the physical space 160 in advance, and then, the collected images may be used to turn the model finely. In this way, the model can grasp a specific position for placing the various objects.

With some implementations of the present disclosure, the first object 220, the second object 230, the candidate objects, etc., may be determined using powerful processing capabilities and rich knowledge for the model. As compared with a prior art solution which looks for target objects in the physical space 160 only by means of image recognition, the technical solution of the present disclosure can obtain a first object 220 having a coupling relationship with a second object 230 in a physical space 160. Furthermore, the technical solution of the present disclosure can also associate factors of the current state of the first object 220 and the usage scenario, to further obtain a candidate object associated with the first object 220. In this manner, the efficiency of obtaining the first object 220 may be improved, thereby improving the overall efficiency of performing the user task.

In accordance with some implementations of the present disclosure, a knowledge base may be utilized to determine an association between a candidate object and the first object 220. Specifically, in the process of determining the association between the candidate object and the first object 220, a plurality of objects may be recognized from the images (for example, the first image 310 and the second image 320) in the physical space 160, and the candidate object is selected from the plurality of objects based on the knowledge base. Here, the knowledge base may be predefined and include a first object 220 and a plurality of candidate objects having associations with the first object 220. For example, the knowledge base may include: (bowl, chopstick), (red wine, bottle opener), etc.

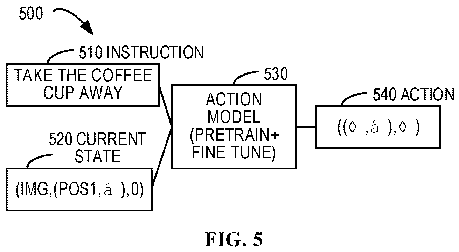

In accordance with some implementations of the present disclosure, an action model may be utilized to determine specific actions performed by a robot device. More details are described with reference to Fig. 5, which illustrates a block diagram 500 of a process of calling an action model in accordance with some implementations of the present disclosure. As shown in Fig. 5, an action model 530 may be provided, which may determine a specific action to be performed by the robot device based on a current state of the robot device and instructions, and the action model may be a pre-training and fine-tuning model.

It should be understood that the current state herein may include data in a plurality of aspects, such as an image of the robot device, an environment image of the robot device, posture data of the robotic arm (e. g., position of various joints of the robotic arm (POS1,.. )), and the state of the tool (e. g., clamps, knives, etc. ) fixed to an end of the robotic arm. For example, 0 may be used to represent the closed state of the clamp, and 1 may be used to represent the open state of the clamp. Instructions and current state can be input to the action model 530, and then the action model can be utilized to determine the action to be performed by the robot device based on the instructions and current state. Here, the action may represent a difference between the current posture and the next posture of the robot device, and a difference between the current state and the next state of the tool, and so on.

The instruction 510 (e. g., "Take the coffee cup away") may be input to the action model 530, where the instruction 510 may be expressed in natural language, and may be determined from the response of the language model. Further, the current state of the robot device can be obtained, and the action model 530 can determine a corresponding action 540 based on the input data. For example, an orientation, position, velocity, acceleration, etc. of various joints in the arm, and/or wheels and/or other movable devices of the robot device, at a next time point can be determined. Further, the determined action 540 can be utilized to control the state of the robot device at the next time point.

With some implementations of the present disclosure, an association can be established between the language model and the action model, and the user task initially input by the user and expressed in natural language is converted into a specific action that can be performed by the robot device. In this manner, the action of the robot device can be precisely controlled, thereby performing a user task with higher efficiency.

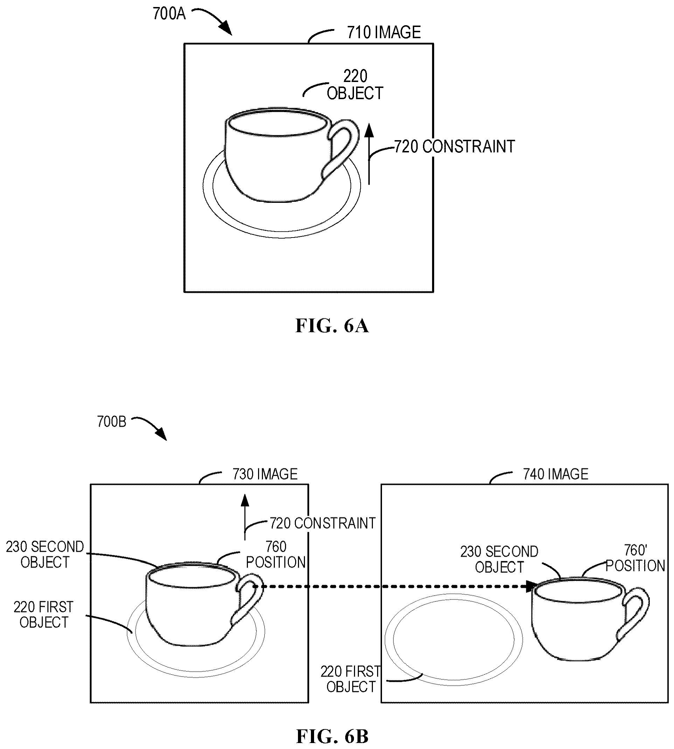

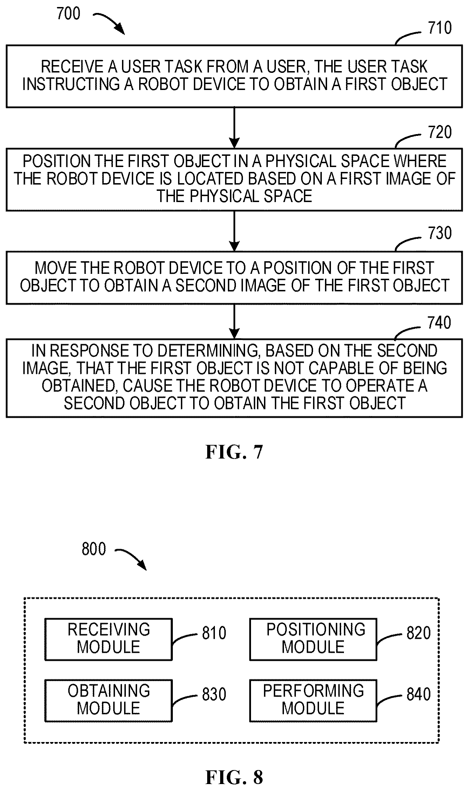

In accordance with some implementations of the present disclosure, more details are described with reference to Figs. 6 and 7B, where Fig. 6A illustrates a coupling relationship between a first object 220 and a second object 230 in accordance with some implementations of the present disclosure, and FIG. 6B illustrates a decoupling the first object 220 from the second object 230 in accordance with some implementations of the present disclosure.

After the user makes a second answer indicating removing the coupling relationship between the first object 220 and the second object 230, an instruction related to the second answer may be input to the action model 530. Further, the action model 530 may generate a new action to remove the coupling relationship between the first object 220 and the second object 230. With some implementations of the present disclosure, new instructions and states can be continuously input into the action model to determine subsequent actions.

According to some implementations of the present disclosure, a constraint 720 may be determined, i.e., a constraint that should be followed during performance of the action. For example, it may be determined that the original posture of the coffee cup should be maintained during the movement of the coffee cup (e. g., keeping the cup mouth up, without being tilted). The constraint 720 may be determined using a language model. For example, a prompt may be generated "Please determine a constraint that should be followed during movement of the coffee cup based on an image" or "Please determine notes for movement of the coffee cup", etc. In this case, the language model may generate a corresponding constraint. The constraint may be input into the action model 530. In this case, a series of actions output by the action model 530 move the coffee cup to remove the coupling relationship between the coffee cup and the cup-saucer under a condition that the constraint is ensured. With some implementations of the present disclosure, security may be ensured during operation of the robot device, thereby avoiding accidental damage to an object, and so on.

According to some implementations of the present disclosure, in order to remove the coupling relationship between the first object 220 and the second object 230, the second object 230 may be removed first, and then the first object 220 is taken. As illustrated in Fig. 6B, according to some implementations of the present disclosure, the target position may be determined and the robot device is instructed to move the second object 230 to the target position. At this time, the action model will generate an action to control the robot device to move the second object 230 from the position 760 to the position 760'. In this way, the robot device may be supported to handle complex problems in complex environments to perform a user task in a more accurate manner.

It should be appreciated that although one example implementation according to the present disclosure is described above using a Chinese language environment as an example. Alternatively, and/or additionally, the technical solution according to one example implementation of the present disclosure may be implemented in various language environments. For example, robots can be controlled in a Chinese environment, English environment, Japanese environment, French environment, etc. In particular, robots can be controlled in different language application environments based on multi-lingual capabilities provided by machine learning techniques. Further, although the process of performing user a task using a robot device has been described above with taking a cup-saucer as an example, alternatively and/or additionally, the robot device may be controlled to perform other user tasks, such as, for example, finding other items in a room, placing an item at a designated position, etc.

According to some implementations of the present disclosure, a variety of positioning algorithms may be utilized to determine positions of the robot device and various objects in the physical environment. For example, a global positioning system (GPS) may be deployed at the robot device, and a precise position of the robot device is determined using satellite signals. Alternatively, and/or additionally, a communication unit may be deployed at the robot device, the position of the robot device being determined by means of a signal between the communication unit and the base station and using a communication network. Alternatively, and/or additionally, a Wi-Fi access point may be deployed in the physical space, and the communication unit at the robot device may interact with the Wi-Fi hotspot to determine the position via Wi-Fi signal strength and a known position of the Wi-Fi access point. Alternatively, and/or additionally, the communication unit at the robot device can support Bluetooth functionality, at which point the position of nearby devices can be determined using Bluetooth signals and known Bluetooth device positions. An inertial navigation system may be deployed at the robot device and an accelerometer and gyroscope is used to measure and calculate the movement and orientation of the computing device in space, thereby determining the position of the robot device.

Alternatively, and/or additionally, a visual positioning system may be used to determine the position of the robot device and/or various objects. A map of the physical space can be obtained in advance, and positions of various objects are marked in the map. The robot device can detect a distance from a surrounding object by using an echo detection unit, and determine specific positions of various objects by combining the collected image and the map of the physical space. In particular, with computer-aided design (CAD) and geographical information system (GIS), and the position is determined using positioning algorithms. Alternatively, and/or additionally, a tracking unit may be deployed at an important object in a physical space, for example, a tracking unit may be added at a remote controller (for example, a TV remote controller or an air conditioner remote controller) of a household appliance, so that a robot device can obtain an accurate position of the important object in time, and the like.

According to some implementations of the present disclosure, an original position of the robot device itself and a destination position to which it is desired to go may be determined based on the method described above. The robot device can determine a path from an original position to a destination position. For example, surroundings images can be constantly obtained, and in a case where it is ensured that an obstacle is avoided, the path is constantly updated, and the robot device is caused to move to the destination position along the path.

According to some implementations of the present disclosure, after reaching the destination position, the robot device can perform a specified task. For example, a specified object may be obtained and moved to a corresponding position. A language model and/or a knowledge base can be utilized to determine a constraint, i.e., a constraint that should be followed during performance of a task. For example, an image and a corresponding prompt may be obtained, the image and the prompt are input into a language model, and then a constraint is received from the language model. For example, the prompt may be determined as "please determine a constraint that should be followed during movement of the XXX object based on the following image", or "Please determine precautions to be taken during movement of the XXX object", etc.

At this point, it may be determined that during movement of the object (e. g., bottled water, a dish, a bowl, etc.), the original posture of the object should be maintained (e. g., the vertical direction is maintained without being tilted). Further, a constraint may be input into the action model, and at this time, a corresponding task will be performed according to a series of actions output by the action model while ensuring the constraint. With some implementations of the present disclosure, security may be ensured during operation of the robot device, thereby avoiding accidental damage to an object, and so on.

Alternatively, and/or additionally, the user can interact with the robot device via the interaction unit 112, e. g., the user inputs a task represented in words and/or images, and controls the robot device to perform the task. Alternatively, and/or additionally, the user may specify a performing condition for the task, e. g., perform the task immediately, perform the task after a predetermined time, perform the task when it is determined that a predetermined condition is satisfied (e. g., after the user gets up), etc.

### Example Processes

Fig. 7 illustrates a flowchart of a method 700 for performing a user task according to some implementations of the present disclosure. Specifically, at block 710, a user task is received from a user, the user task instructing a robot device to obtain a first object; at block 720, a first object is positioned in a physical space where the robot device is located based on a first image of the physical space; at block 730, the robot device moves to a position of the first object so as to obtain a second image of the first object; and at block 740, in response to determining, based on the second image, that the first object cannot be obtained, the robot device operates the second object to obtain the first object.

According to some implementations of the present disclosure, positioning a first object includes: obtaining, based on the first image and the first object, a first prompt for positioning the first object in the first image; and receiving a first response of a machine learning model to the first prompt so as to position the first object.

According to some implementations of the present disclosure, positioning the first object includes recognizing the first object from the first image.

According to some implementations of the present disclosure, positioning the first object includes: in response to determining presence of a plurality of first objects in the physical space, providing a first message to the user to indicate the presence of the plurality of first objects in the physical space; and positioning the first object based on a first answer to the first message from the user.

According to some implementations of the present disclosure, operating the second object includes: obtaining, based on the second image and the first object, a second prompt for determining an operation mode of the second object; determining an action of the robot device based on the security constraint and the operation mode; and the robot device operating the second object based on the operation mode.

According to some implementations of the present disclosure, operating the second object further includes: determining a security constraint associated with the operation mode; determining an action of the robot device based on the security constraint and the operation mode; and the robot device operating the second object according to the action.

According to some implementations of the present disclosure, the method 700 further includes: providing a second message to the user, the second message indicating that the first object is not capable of being obtained; receiving a second answer of the user to the second message; and the robot device processing the first object based on the second answer.

According to some implementations of the present disclosure, the method 700 further includes at least one of: in response to determining that the second answer indicates to operate the second object, the robot device operating the second object so as to obtain the first object; and in response to determining that the second answer indicates to obtain the first object directly, the robot device obtaining the first object.

According to some implementations of the present disclosure, the method 700 further includes: in response to determining, based on the second image, that the first object is not capable of being obtained, determining a candidate object for replacing the first object; providing a third message to the user so as to indicate the candidate object; and receiving a third answer to the third message from the user, to select the candidate object as the first object.

According to some implementations of the present disclosure, the method 700 further includes, in response to determining that the first object is in an unavailable state, the robot device obtaining a third object for adjusting the unavailable state.

According to some implementations of the present disclosure, the method 700 further includes: the robot device moving the first object to a user position of the user.

### Example Apparatus and Device

Fig. 8 illustrates a block diagram of an apparatus 800 for performing a user task, in accordance with some implementations of the present disclosure. The apparatus 800 includes: a receiving module 810 configured to receive a user task from a user, the user task instructing a robot device to obtain a first object; a positioning module 820 configured to position a first object in a physical space where the robot device is located based on a first image of the physical space; an obtaining module 830 configured to cause the robot device to move to a position of the first object so as to obtain a second image of the first object; and a performing module 840 configured to cause the robot device to operate the second object so as to obtain the first object in response to determining based on the second image that the first object is not capable of being obtained.

According to some implementations of the present disclosure, the positioning module 820 is further configured to: obtain, based on the first image and the first object, a first prompt for positioning the first object in the first image; and receive a first response of a machine learning model to the first prompt so as to position the first object.

According to some implementations of the present disclosure, the positioning module 820 is further configured to recognize the first object from the first image.

According to some implementations of the present disclosure, the positioning module 820 is further configured to: in response to determining presence of a plurality of first objects in the physical space, provide a first message to the user to indicate the presence of the plurality of first objects in the physical space; and position the first object based on a first answer to the first message from the user.

The method according to claim 1, where the performing module 840 is further configured to: obtain, based on the second image and the first object, a second prompt for determining an operation mode of the second object; determine the operation mode based on a second response of a machine learning model to the second prompt; and the robot device operate the second object based on the operation mode.

According to some implementations of the present disclosure, the performing module 840 is further configured to: determine a security constraint associated with the operation mode; determining an action of the robot device based on the security constraint and the operation mode; and the robot device operating the second object in accordance with the action.

According to some implementations of the present disclosure, further including an interaction module configured to: provide a second message to a user, the second message indicating that a first object is not capable of being obtained; receive a second answer of the user to the second message; and cause the robot device to process the first object based on the second answer.

According to some implementations of the present disclosure, the performing module 840 is further configured to perform at least any one of: in response to determining that the second answer indicates to operate the second object, cause the robot device to operate the second object so as to obtain the first object; or in response to determining that the second answer indicates to obtain the first object directly, cause the robot device to obtain the first object.

According to some implementations of the present disclosure, the interaction module is further configured to: in response to determining, based on the second image, that the first object is not capable of being obtained, determine a candidate object for replacing the first object; provide a third message to the user so as to indicate the candidate object; and receive a third answer to the third message from the user to select the candidate object as the first object.

According to some implementations of the present disclosure, the performing module 840 is further configured to, in response to determining that the first object is in an unavailable state, cause the robot device to obtain a third object for adjusting the unavailable state.

According to some implementations of the present disclosure, the performing module 840 is further configured to: cause the robot device to move the first object to a user position of the user.

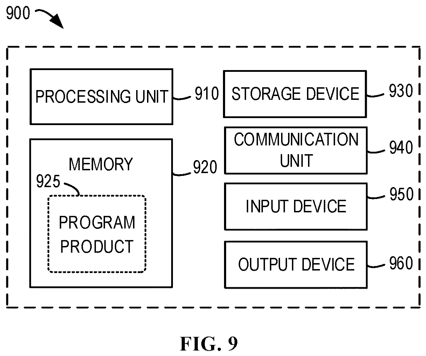

Fig. 9 illustrates a block diagram of a device 900 in which one or more implementations of the present disclosure may be implemented. It should be understood that the computing device 900 shown in Fig. 9 is merely exemplary and should not constitute any limitation on the functionality and scope of the implementations described herein. The computing device 900 shown in Fig. 9 may be used to implement the above-described method.

As shown in Fig. 9, the computing device 900 is in the form of a general-purpose computing device. Components of the computing device 900 may include, but are not limited to, one or more processors or processing units 910, a memory 920, a storage device 930, one or more communications units 940, one or more input devices 950, and one or more output devices 960. The processing unit 910 may be an actual or virtual processor and can perform various processes according to programs stored in the memory 920. In a multiprocessor system, a plurality of processing units execute computer executable instructions in parallel, so as to improve the parallel processing capability of the computing device 900.

The computing device 900 typically includes a number of computer storage media. Such media may be any available media that are accessible by the computing device 900, including, but not limited to, volatile and non-volatile media, removable and non-removable media. The memory 920 may be a volatile memory (e. g., a register, cache, random access memory (RAM)), non-volatile memory (e.g., read-only memory (ROM), electrically erasable programmable read-only memory (EEPROM), flash memory), or some combination thereof. The storage device 930 may be a removable or non-removable medium and may include a machine-readable medium such as a flash drive, a magnetic disk, or any other medium that can be used to store information and/or data (e. g., training data for training) and that can be accessed within the computing device 900.

The computing device 900 may further include additional removable/non-removable, volatile/nonvolatile storage media. Although not shown in Fig. 9, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. The memory 920 may include a computer program product 925 having one or more program modules configured to perform various methods or actions of various implementations of the present disclosure.

The communication unit 940 implements communication with other computing devices through a communication medium. In addition, functions of components of the computing device 900 may be implemented by a single computing cluster or a plurality of computing machines, and these computing machines can communicate through a communication connection. Thus, the computing device 900 may operate in a networked environment using logical connections to one or more other servers, network personal computers (PCs), or another network node.

The input device 950 may be one or more input devices such as a mouse, keyboard, trackball, etc. The output device 960 may be one or more output devices such as a display, speaker, printer, etc. The computing device 900 may also communicate with one or more external devices (not shown) such as a storage device, a display device, or the like through the communication unit 940 as required, and communicate with one or more devices that enable a user to interact with the computing device 900, or communicate with any device (e. g., a network card, a modem, or the like) that enables the computing device 900 to communicate with one or more other computing devices. Such communication may be performed via an input/output (I/O) interface (not shown).

According to an exemplary implementation of the present disclosure, a computer readable storage medium is provided, on which a computer-executable instruction is stored, where the computer executable instruction is executed by a processor to implement the above-described method. According to an exemplary implementation of the present disclosure, there is also provided a computer program product, which is tangibly stored on a non-transitory computer readable medium and includes computer-executable instructions that are executed by a processor to implement the method described above. According to an exemplary implementation of the present disclosure, there is provided a computer program product, having a computer program stored thereon, the program, when being executed by a processor, implements the above-described method.

Aspects of the present disclosure are described herein with reference to flowchart and/or block diagrams of methods, apparatus, devices and computer program products implemented in accordance with the present disclosure. It will be understood that each block of the flowcharts and/or block diagrams and combinations of blocks in the flowchart and/or block diagrams can be implemented by computer readable program instructions.

These computer readable program instructions may be provided to a processing unit of a general-purpose computer, special purpose computer, or other programmable data processing apparatus to produce a machine, such that the instructions, which execute via the processing unit of the computer or other programmable data processing apparatus, create means for implementing the functions/actions specified in one or more blocks of the flowchart and/or block diagrams. These computer readable program instructions may also be stored in a computer readable storage medium that can direct a computer, a programmable data processing apparatus, and/or other devices to function in a particular manner, such that the computer readable medium storing the instructions includes an article of manufacture including instructions which implement various aspects of the functions/actions specified in one or more blocks of the flowchart and/or block diagrams.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is exemplary, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

## Claims

1. A method for performing a user task, comprising:
receiving a user task from a user, the user task instructing a robot device to obtain a first object;
positioning the first object in a physical space where the robot device is located based on a first image of the physical space;
moving the robot device to a position of the first object to obtain a second image of the first object; and
in response to determining, based on the second image, that the first object is not capable of being obtained, causing the robot device to operate a second object to obtain the first object.

2. The method of claim 1, wherein positioning the first object comprises:
obtaining, based on the first image and the first object, a first prompt for positioning the first object in the first image; and
receiving a first response of a machine learning model to the first prompt to position the first object.

3. The method of claim 1, wherein positioning the first object comprises: recognizing the first object from the first image.

4. The method of claim 1, wherein positioning the first object comprises:
in response to determining presence of a plurality of first objects in the physical space, providing a first message to the user to indicate presence of the plurality of first objects in the physical space; and
positioning the first object based on a first answer to the first message from the user.

5. The method of claim 1, wherein operating the second object comprises:
obtaining, based on the second image and the first object, a second prompt for determining an operation mode of the second object;
determining the operation mode based on a second response of a machine learning model to the second prompt; and
causing the robot device to operate the second object based on the operation mode.

6. The method of claim 5, wherein operating the second object further comprises:
determining a security constraint associated with the operation mode;
determining an action of the robot device based on the security constraint and the operation mode; and
causing the robot device to operate the second object according to the action.

7. The method of claim 1, further comprising:
providing a second message to the user, the second message indicating that the first object is not capable of being obtained;
receiving a second answer from the user to the second message; and
causing the robot device to process the first object based on the second answer.

8. The method of claim 7, further comprising at least one of:
in response to determining that the second answer indicates to operate the second object, causing the robot device to operate the second object to obtain the first object; and
in response to determining that the second answer indicates to obtain the first object directly, causing the robot device to obtain the first object.

9. The method of claim 1, further comprising:
in response to determining, based on the second image, that the first object is not capable of being obtained, determining a candidate object for replacing the first object;
providing a third message to the user to indicate the candidate object; and
receiving a third answer to the third message from the user to select the candidate object as the first object.

10. The method of claim 1, further comprising: in response to determining that the first object is in an unavailable state, causing the robot device to obtain a third object for adjusting the unavailable state.

11. The method of claim 1, further comprising: causing the robot device to move the first object to a user position of the user.

12. An apparatus for performing a user task, comprising:
a receiving module configured to receive a user task from a user, the user task instructing a robot device to obtain a first object;
a positioning module configured to position the first object in a physical space where the robot device is located based on a first image of the physical space;
an obtaining module configured to move the robot device to a position of the first object to obtain a second image of the first object; and
a performing module configured to in response to determining, based on the second image, that the first object is not capable of being obtained, cause the robot device to operate the second object to obtain the first object.

13. An electronic device, comprising:
at least one processing unit; and
at least one memory coupled to the at least one processing unit and storing instructions for execution by the at least one processing unit, when executed by the at least one processing unit, the instructions cause the electronic device to perform the method according to any one of claims 1 to 11.

14. A computer readable storage medium having stored thereon a computer program, the computer program, when being executed by a processor, causing the processor to implement the method according to any one of claims 1 to 11.

15. A computer program product comprising a computer program, wherein the computer program, when executed by a processor, implements the method according to any of claims 1 to 11.
